# EUROPÄISCHE PATENTSCHRIFT

(11) **EP 2 010 757 B1**
(45) Veröffentlichungstag und Bekanntmachung des Hinweises auf die Patenterteilung: **19.06.2013**
(21) Anmeldenummer: 07726359.8
(22) Anmeldetag: 13.02.2007
(51) Int. Cl.: F01D 5/18, F02K 3/08, F01D 9/06, F02C 3/16, F01D 5/14

(54) **TURBINENSCHAUFEL**
TURBINE BLADE
AUBE DE TURBINE

(30) Priorität: 21.04.2006 EP 06008319
(43) Veröffentlichungstag der Anmeldung: 07.01.2009
(73) Patentinhaber: Siemens Aktiengesellschaft, 80333 München (DE)
(72) Erfinder: BEECK, Alexander Ralph, Orlando, FL 32828 (US); HOFFMANN, Stefan, 35119 Rosenthal (DE)
(86) Internationale Anmeldenummer: PCT/EP2007/051403
(87) Internationale Veröffentlichungsnummer: WO 2007/122022

(56) Entgegenhaltungen:
- EP-A1- 1 580 399
- EP-A2- 0 896 127
- EP-A2- 1 467 065
- US-A- 3 527 543
- US-B1- 6 551 063

## Beschreibung

Die Erfindung betrifft eine Turbinenschaufel mit einem profilierten, von einem Arbeitsgas umströmbaren Schaufelblatt, welches eine vom Arbeitsgas anströmbare Vorderkante aufweist sowie eine Hinterkante, an der das Arbeitsgas abströmbar ist, und mit einem ersten Kanalsystem und mit einem zweiten Kanalsystem zum getrennten Führen zweier unterschiedlicher, der Turbinenschaufel getrennt zuführbaren Medien, wobei das erste Kanalsystem in mindestens einer ersten, im Bereich der Hinterkante angeordneten Austrittsöffnung zum Ausblasen des ersten Mediums in das Arbeitsgas mündet.

Eine derartige Turbinenschaufel ist beispielsweise aus der WO 2005/3517 A1 bekannt. Die das Schaufelblatt bildenden Schaufelwände umgeben einen im Inneren liegenden Hohlraum, in dem Kühlluft strömbar ist. Außerdem sind in der Schaufelwand der Turbinenschaufel weitere Kanäle zum Führen eines zweiten Mediums, nämlich Brennstoff, vorgesehen. Durch die Schaufelwand der Turbinenschaufel verlaufen Bohrungen, durch welche das im Inneren der Turbinenschaufel strömende Kühlmittel nach Außen in einen Heißgasraum austreten kann. Um ein brennbares Gemisch herzustellen, sind in der Schaufelwand Verbindungskanäle vorgesehen, welche die Brennstoff führenden Kanäle mit den Durchgangsbohrungen verbinden. Somit kann sich Brennstoff mit Kühlluft noch innerhalb der Durchgangsbohrungen vermischen und als brennbares Gemisch in das die Turbinenschaufel umströmende Heißgas ausgeblasen werden. Mit einer solchen Turbinenschaufel kann sowohl das die Turbine durchströmende Heißgas als auch die aus der Turbinenschaufel ausströmende Kühlluft durch das Verbrennen des Gemischs nachgeheizt werden, was im Allgemeinen zur Leistungsgradsteigerung der Gasturbine, zur Reduzierung der Schadstoffemissionen und zur Verbesserung des Wirkungsgrades der Gasturbine durchgeführt wird und als eine Form der Carnotisierung bekannt ist.

Außerdem ist aus der WO 99/46540 A1 eine Brennkammer mit einer Vielzahl von porösen Hitzeschildelementen bekannt, durch die ein brennbares Gemisch nachträglich, d.h. außerhalb von Brennern der Gasturbine, in den verbrennungsraum einer Gasturbine eingebracht werden kann.

Aus der EP 0 896 127 A2 ist eine Turbinenschaufel mit einer Vielzahl von im Inneren angeordneten Kühlkanälen bekannt, die sich vom Schaufelfuß zur Schaufelspitze hin erstrecken und dabei auch mäanderförmig ausgebildet sind. Die Kühlkanäle sind mit insgesamt drei fußseitigen Öffnungen zum Zuführen von Kühlluft unterschiedlicher Qualität verbunden. Eine der Öffnungen ist mit einem geradlinigen, sich vom Schaufelfuß bis annähernd zur Schaufelspitze erstreckenden Hohlraum verbunden. Dieser Hohlraum ist unmittelbar zur Hinterkante des Schaufelblatts der Turbinenschaufel benachbart und steht mit den an der Hinterkante angeordneten Austrittsöffnungen in Strömungsverbindung. Das durch die entsprechende fußseitige Öffnung zugeführte Kühlmittel kann den Hohlraum durchströmen und über die Austrittsöffnungen über die annähernd gesamte Länge der Hinterkante diese dabei kühlend verlassen. Zugleich weist die Turbinenschaufel einen weiteren Hohlraum auf, an dessen schaufelspitzseitigem Ende sich ein quer zur Längserstreckung des Schaufelblatts erstreckender Kühlkanal vorgesehen ist. Dieser mündet in der Hinterkante lediglich in dessen schaufelspitzseitigem Bereich.

Des Weiteren ist aus der US 6,551,063 bekannt, die Hinterkante einer Turbinenschaufel modular auszuführen, indem bei einer Turbinenschaufel mit einer so genannten "cut back"-Hinterkante eine die Hinterkantenrippen überdeckendes blechartiges Element angelötet oder angeschweißt wird.

Nachteilig an den auch als "in-situ blade reheat" bekannten Konzepten ist, dass durch die Vermischung von Kühlluft und Brennstoff in den Bauteilen sich die Reaktionspartner durch Selbstzündung oder Flammenrückschlag entzünden können. Hierdurch bilden sich unter Umständen stabile Verbrennungsvorgänge in Inneren der Turbinenschaufel aus, so dass die Kühlwirkung des Brennstoff-Luftgemisches verloren geht, bzw. das Bauteil durch die intern auftretende Verbrennung Schaden nehmen kann.

Es ist daher die Aufgabe der Erfindung, eine Turbinenschaufel für eine Gasturbine bereitzustellen, bei der eine im Inneren stattfindende Verbrennung zur Erhaltung der Lebensdauer der Turbinenschaufel und zur Vermeidung von Schäden in der Gasturbine sicher vermieden wird.

Die Lösung dieser Aufgabe wird mit einer gattungsgemäßen Turbinenschaufel gemäß Anspruch 1 erzielt.

Die Erfindung geht von der Erkenntnis aus, dass es primär notwendig ist, die Reaktionspartner, d. h. die beiden Medien, innerhalb der Turbinenschaufel getrennt zu führen und eine Vermischung innerhalb des Volumina des Bauteils zu vermeiden, um eine im Inneren der Turbinenschaufel ggf. stattfindende ungewollte Verbrennung sicher zu verhindern. Ebenso muss sicher vermieden werden, dass der im Arbeitsgas herrschende Druck und ggf. auch die Strömungsrichtung des Arbeitsgases einen Flammenrückschlag ins Bauteil herbeiführen können. Aus diesem Grund sind die Austrittsöffnungen, aus denen einerseits das erste Medium, beispielsweise Kühlluft, und andererseits das zweite Medium, beispielsweise Brennstoff, austreten, nicht quer oder zur Strömungsrichtung des Arbeitsgases hin geöffnet, sondern sie sind an der Hinterkante der Turbinenschaufel angeordnet, so dass die ausströmenden Medien mindestens eine gleichgerichtete Strömungskomponente im dreidimensionalen Raum aufweisen wie das Arbeitsgas.

Da beide Medien an der Hinterkante aus dem Bauteil ausgeblasen und in das Arbeitsgas eingeblasen werden, können sich die Reaktionspartner erst außerhalb der Turbinenschaufel zu einem ggf. brennbaren Gemisch vermischen. Die vorgeschlagene Lösung ermöglicht außerdem die schnelle Vermischung von einem ersten Medium mit einem zweiten Medium, welches so entstandene Gemisch wiederum dem Arbeitsgas der Turbine untergemischt wird. Die Gefahr von Rückzündungen eines evtl. brennbaren Gemisches wird somit wirksam verhindert, da im Inneren der Turbinenschaufel kein brennbares Gemisch aus erstem und zweitem Medium auftritt oder aufgrund des Druckes im Arbeitsgas und/oder dessen Strömungsrichtung zurück in die Turbinenschaufel eingeblasen werden kann. Folglich kann mit der angegebenen Erfindung eine besonders sichere Turbinenschaufel angegeben werden, in welche ein brennbares Gemisch aus erstem Medium und zweitem Medium nicht zurückführbar ist. Eine Selbstzündung des Gemischs innerhalb der Turbinenschaufel kann unter Aufrechterhaltung der Lebensdauer der Turbinenschaufel sicher vermieden werden. In einer mit der erfindungsgemäßen Turbinenschaufel ausgestatteten Turbine kann das in der Turbine strömende Arbeitsgas zuverlässig und risikolos im Hinblick auf einen durch im Inneren der Turbinenschaufel stattfindenden Brand nachgeheizt werden.

Die Rückschlagssicherheit wird vor allen Dingen dadurch sichergestellt, dass der Brennstoff nahe der Hinterkante im Bereich gerichteter Arbeitgasströmung, d.h. mit zwei identischen Strömungsrichtungskomponenten und ohne Ausbildung von Rückströmzonen eingedüst wird. Es treten somit keine durch Strömungswirbel verursachten Verweilzeitverteilungen auf, die eine Verbrennung im Inneren der Turbineschaufel hervorgerufen können.

Selbstverständlich kann die vorgeschlagene Turbinenschaufel auch zur Zugabe anderer fluider Medien als Brennstoff oder Luft innerhalb einer Turbine, unabhängig davon ob Gas- oder Dampfturbine, eingesetzt werden.

Eine äußerst effiziente, emissionsarme Verbrennung des Brennstoff im Arbeitsgas kann erreicht werden, wenn sich die Hinterkante entlang einer Schaufelblatthauptachse von einem Fußbereich des Schaufelblattes zu einem diesem gegenüberliegenden Kopfbereich erstreckt, wobei entlang der Schaufel-blatthauptachse betrachtet die zweite Austrittsöffnung zumindest teilweise auf der gleichen Höhe angeordnet ist wie die erste Austrittsöffnung. Somit ist es erstmalig möglich, dass durch die Hinterkante auf einer radialen Höhe des ringkanalförmigen Arbeitsgasraumes der Gasturbine sowohl Brennstoff als auch Verbrennungsluft gleichzeitig in das Arbeits-gas eindüsbar ist, um eine besonders effiziente Verbrennung zu erreichen. Folglich liegen die erste Austrittsöffnung und die zweite Austrittsöffnung in Richtung der Schaufelblatthauptachse gesehen, nicht hintereinander, sondern überlappend nebeneinander.

Um eine besonders gut aufeinander abgestimmte Menge von erstem und zweitem Medium innerhalb eines vergleichsweise schmalen Abschnittes der Hinterkante in das Arbeitsgas einzudüsen, bildet jeweils eine der ersten Austrittsöffnungen mit jeweils einer der zweiten Austrittsöffnungen ein - entlang der Schaufelblatthauptachse gesehen - sich überlappendes Paar von Öffnungen. Besonders bevorzugt ist dabei die Ausgestaltung einer erfindungsgemäßen Turbinenschaufel, bei der mehrere Paare von nebeneinander angeordneten Öffnungen entlang der Hinterkante aufeinander folgen, so dass über die gesamte Höhe des Schaufelblattes der Turbinenschaufel das nebeneinander Ausblasen der beiden Medien erfolgen kann. Um dies zu erreichen, können sich alternativ zur vorgenannten Lösung die erste und die zweite Austrittsöffnung auch jeweils über die gesamte Höhe der Hinterkante erstrecken.

In einer ersten Ausgestaltung wird vorgeschlagen, dass im Bereich der Hinterkante Mittel vorgesehen sind, welche eine Vermischung des ersten Mediums mit dem zweiten Medium unmittelbar stromab der Austrittsöffnungen herbeiführen. Die Ausblasung beider Medien erfolgt in einer Art und Weise, die eine schleunigste Vermischung nach ihrem Eintritt in den Arbeitsgasraum nach kürzester Strecke und nach kürzester Zeit bedingt. Damit wird sichergestellt, dass im Arbeitsgasraum zuerst eine äußerst homogene Vermischung der beiden Medien erfolgt und erst im Anschluss daran das zur Nachheizung des die Turbine durchströmenden Arbeitsgases mit diesem vermischt und aufgrund der im Arbeitsgas herrschenden Temperatur selbsttätig entzündet wird. Dies ermöglicht eine besonders emissionsarme Verbrennung des im ersten Vermischungsschritt hergestellten brennbaren Gemischs durch Vormischflammen.

Durch die Vermischung innerhalb einer kurzen Reaktionsstrecke und Reaktionszeit wird außerdem erreicht, dass das Gemisch noch vor dem Verlassen des ringkanalförmigen Arbeitsgasraumes verbrennt, da die durch die Nachheizung des Arbeitsgases stattfindende Energieerhöhung des Arbeitsgases nur dann zur Leistungssteigerung und Wirkungsgradsteigerung der Turbine beträgt, wenn das nachgeheizte Arbeitsgas noch an den Laufschaufeln der Turbine zur Umsetzung der Strömungsenergie in mechanische Energie vorbeiströmt.

Durch die kurze Reaktionsstrecke kann sich ferner die Baulänge der Turbine verkürzen. Daher kann mit der Erfindung auch eine besonders kompakte als auch kostengünstig herzustellende Gasturbine angegeben werden, welche mit den erfindungsgemäßen Turbinenschaufeln ausgestattet ist.

Darüber hinaus wird vorgeschlagen, dass das Mittel eine rückströmfreie Vermischung des ersten Mediums mit dem zweiten Medium hervorruft, indem mindestens eines der beiden oder beide Medien zumindest annähernd an einer scharfen Kante ausgeblasen wird. Durch die scharfe Kante werden rückströmfreie Wirbel erzeugt, die aufgrund ihrer Strömungsrichtung verhindern, dass das Gemisch in die Turbinenschaufel zurückströmt. Außerdem soll ein Zurückführen des im Arbeitsgasraum vorliegenden Gemischs ohnehin durch Druckverhältnisse vermieden werden, bei denen der an der Austrittsöffnung in den beiden Medien herrschende Druck größer ist als der Druck des Arbeitsgases. Ein im Inneren der Turbinenschaufel möglicherweise stattfindender Verbrennungsvorgang des Gemischs kann somit wirksam vermieden werden, was die Lebensdauer der Turbinenschaufel aufrechterhält.

Es wird ferner vorgeschlagen, dass das in der Hinterkante des Schaufelblatts angeordnete Mittel mindestens eine Verbindungspassage umfasst, welche mindestens eines der beiden Kanalsysteme mit der ihr zugeordneten Austrittsöffnung verbindet, wobei die Verbindungspassage der Gestalt ist, dass diese dem durch sie strömenden Medium einen Drall oder Wirbel aufprägt. Die das Kanalsystem mit der korrespondierenden Austrittsöffnung verbindende Verbindungspassage weist somit eine räumliche Gestalt auf, die dem durch sie strömendem Medium einen Drall oder Wirbel aufprägt, der sich nach ihrem Austreten aus der Austrittsöffnung fortsetzt. Die Richtungen des Dralls bzw. der Wirbel sind so gewählt, dass unmittelbar nach dem Austreten aus der Austrittsöffnung die beiden Medien ineinander strömen und so ihre wirksame Vermischung herbeiführen. Dies führt zu einem besonders homogenen Gemisch und zu dessen besonders effizienten und emissionsarmen Verbrennung durch eine sich selbst entzündete Vormischflamme. Folglich kann die durch die Gasturbine hervorgerufene Schadstoffbelastung, insbesondere die NOx-Emissionen, gering gehalten werden.

Beispielsweise sind die Verbindungspassagen nach Art eines Korkenziehers gewendelt, so dass die durch die Austrittsöffnungen austretenden Medien diese Schraubenbewegung, d. h. ihre Strömungsrichtung, nach dem Austritt versuchen aufrecht zu erhalten. Bei geeigneter, d. h. bei versetzter Anordnung der korkenziehartig ausgeprägten Verbindungspassagen nach Art einer zweigängigen Schraube, kann beiden Medien somit jeweils ein Drall aufgeprägt werden, der diesen nach ihrem Austritt aus den Verbindungspassagen eine besonders effiziente Durchmischung miteinander ermöglicht.

In einer weiteren vorteilhaften Ausgestaltung wird vorgeschlagen, dass das Mittel in den Austrittsöffnungen vorgesehen ist. Folglich können selber in den Austrittsöffnungen, und nicht nur in den vorgeordneten Verbindungskanälen, Turbulatoren, Dimpel oder ähnliches als das Mittel vorgesehen sein, die dem durch sie ausströmenden Medium einen Drall oder rückströmfreien Wirbel aufprägen. Vorzugsweise ist in einer kreisrunden Öffnung eine Düse mit einer sternförmig umlaufenden Kontur als Trennelement für die beiden Medien eingesetzt. Aus dem Zentrum der Düse kann eines der beiden Medien ausströmen und aus der Querschnittsfläche zwischen der kreisrunden Öffnung und der sternförmigen Kontur das andere der beiden Medien. Diese düsenartige Ausgestaltung führt eine weiter verbesserte Durchmischung der beiden ausströmenden Medien herbei.

Ferner wird mit der Erfindung vorgeschlagen, dass die Mittel zum Vermischen des ersten Mediums mit dem zweiten Medium an einer Innenseite der saugseitigen und/oder an einer Innenseite der druckseitigen Hinterkantenwand des Schaufelblatts vorgesehen sind, welche Hinterkantenwände vom Arbeitsgas umströmbar ist/sind.

Das in den Austrittsöffnungen vorgesehene Mittel kann auch eine frei schwingende, einseitig eingespannte Zunge sein, die durch ihre strömungsangeregten Schwingungen die beiden Medien miteinander besonders effizient vermischt.

Wenn die Ausblasung der beiden Medien im Wesentlichen oder annähernd parallel zur Strömungsrichtung des Arbeitsgases erfolgt, kann eine Durchmischung der beiden Medien noch geringfügig innerhalb der Turbinenschaufel im Bereich der Hinterkante stattfinden, ohne die Rückschlagsicherheit des Bauteils zu gefährden. Beispielsweise kann die Durchmischung der beiden Medien durch ein Feld von Pins und/oder Turbulatoren erreicht werden.

Es wird ferner vorgeschlagen, dass das Schaufelblatt gegossen ist und das Mittel zum Vermischen der beiden Medien als separat hergestellter Einsatz in dem Schaufelblatt befestigt ist. Üblicherweise sind die mit der Erfindung vorgeschlagenen strukturellen Merkmale der Turbinenschaufel im Gussverfahren besonders aufwendig herzustellen. Daher schlägt die Erfindung vor, diese Strukturen als separat hergestellter Einsatz vorzufertigen und anschließend in dem gegossenen Schaufelblatt zu befestigen. Hierdurch kann eine besonders kostengünstige Turbinenschaufel angegeben werden.

Die Erfindung schlägt auch eine Gasturbine vor, welche mit einer erfindungsgemäßen Turbinenschaufel ausgestattet ist, wobei sich die mit der Turbinenschaufel einhergehenden Vorteile auch auf die Gasturbine übertragen lassen.

Weitere Vorteile und Merkmale sind der folgenden Beschreibung von Ausführungsbeispielen zu entnehmen. Im Wesentlichen gleich bleibende Elemente sind mit den gleichen Bezugszeichen bezeichnet. Ferner wird bezüglich gleicher Merkmale und Funktionen auf die Beschreibung zum Ausführungsbeispiel verwiesen. Es zeigen:
- FIG 1: eine schematische Darstellung einer Turbinenschaufel mit einer Zuleitung für Brennstoff,
- FIG 2a: einen Querschnitt durch das Schaufelblatt der Turbinenschaufel mit einem in einer Schaufelwand eingegossenen Kanalsystem zum Führen eines zweiten Mediums,
- FIG 2b: einen Querschnitt durch das Schaufelblatt der Turbinenschaufel mit einem von einem rohrartigen Einsatz gebildeten Kanalsystem zum Führen des zweiten Mediums,
- FIG 2c: einen Querschnitt durch das Schaufelblatt der Turbinenschaufel mit einem von einem Prallkühlblech umschlossenen Kanalsystem zum Führen des zweiten Mediums,
- FIG 3: eine perspektivische Ansicht auf die Hinterkante des Schaufelblatts der Turbinenschaufel,
- FIG 4: den Querschnitt durch die Schaufelhinterkante gemäß FIG 3,
- FIG 5: den Querschnitt durch die Hinterkante der Turbinenschaufel mit sich nach Art einer Doppelhelix ineinander windenden Verbindungspassagen,
- FIG 6: den Querschnitt durch die Hinterkante der Turbinenschaufel mit einem in der Hinterkante befestigten beweglichen Element,
- FIG 7: die perspektivische Ansicht der Hinterkante der Turbinenschaufel mit im Bereich der Hinterkante angeordneten Düsen,
- FIG 8: den Querschnitt durch die Hinterkante der Turbinenschaufel gemäß FIG 7 mit der daran angeordneten düsenförmigen Austrittsöffnung,
- FIG 9: die in der Hinterkante der Turbinenschaufel gemäß FIG 7 befestigbare Düse in perspektivischer Darstellung,
- FIG 10: den Querschnitt durch die Hinterkante der Turbinenschaufel mit einem wellenartigen Einsatz,
- FIG 11: die Hinterkante der Turbinenschaufel mit dem wellenartigen Einsatz,
- FIG 12: den wellenartigen Einsatz für eine Turbinenschaufel gemäß FIG 11,
- FIG 13: einen Querschnitt durch die Hinterkante der Turbinenschaufel mit einem in der Hinterkante angeordnetem Feld aus Pins,
- FIG 14: den Längsschnitt durch die Turbinenschaufel gemäß FIG 13 im Bereich der Hinterkante,
- FIG 15: in perspektivischer Darstellung die Hinterkante der Turbinenschaufel mit einer kreuzweisen Ausblasung,
- FIG 16: den Querschnitt durch die Hinterkante der Turbinenschaufel mit einer kreuzweisen Ausblasung gemäß FIG 15,
- FIG 17: den zur Herstellung der kreuzweisen Ausblasung im Bereich der Hinterkante einsetzbaren Einsatz in einer perspektivischen Darstellung und
- FIG 18: einen Einsatz zur Herstellung von gegenläufig strömenden Wirbeln im Bereich der Hinterkante der Turbinenschaufel.

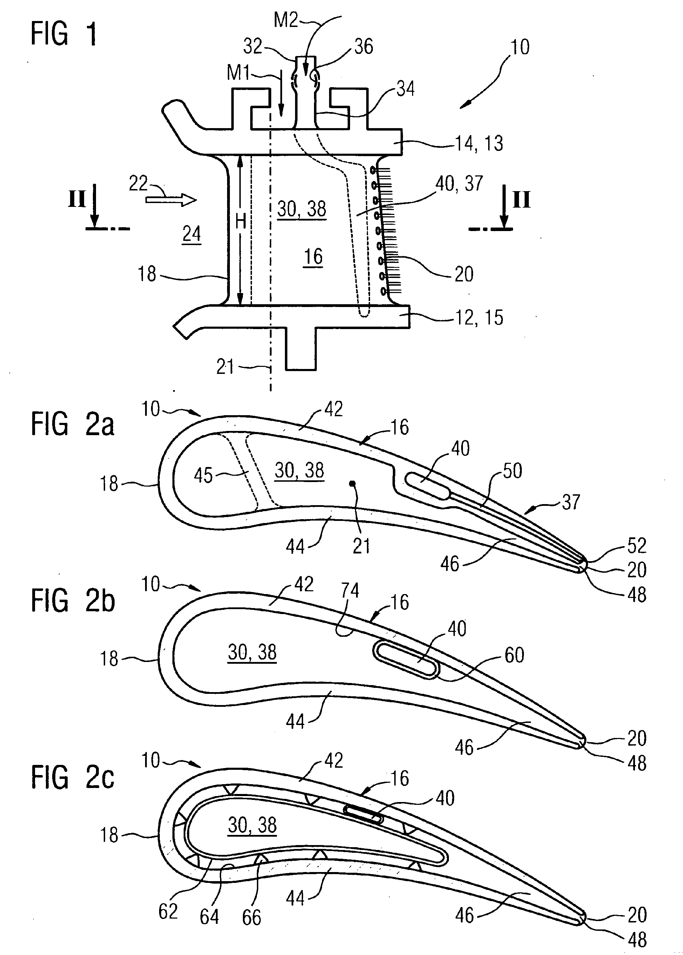

FIG 1 zeigt eine schematische Darstellung einer Turbinenschaufel, wie sie beispielsweise in einer der vorderen Stufen der Turbine einer beispielsweise stationären Axial-Gasturbine eingesetzt wird. Die Turbinenschaufel 10 ist als Leitschaufel dargestellt und umfasst, bezogen auf ihre Einbaulage in der Gasturbine, eine innere Plattform 12, eine äußere Plattform 14 und ein dazwischen sich in Radialrichtung der Gasturbine erstreckendes Schaufelblatt 16. Die äußere Plattform 14 stellt dabei einen Fußbereich 13 dar, an dem die Turbinenschaufel 10, beispielsweise an einem Leitschaufelträger, befestigt werden kann. Ein dem Fußbereich 13 gegenüberliegender Kopfbereich 15 umfasst dabei die innere Plattform 12.

Das Schaufelblatt 16 ist, wie FIG 2a bis FIG 2c darstellen, im Querschnitt tropfenförmig gebogen und erstreckt sich von einer Vorderkante 18 zu einer Hinterkante 20. Eine Schaufelblatthauptachse 21 erstreckt sich dabei im Wesentlichen parallel zur Hinterkante 21 bzw. entlang der Radialrichtung der Gasturbine. Beim Betrieb der Gasturbine wird das eine Höhe H aufweisende Schaufelblatt 16 von einem Arbeitsgas 22 umströmt, welches die Turbinenschaufel 10 zuerst an der Vorderkante 18 anströmt und nach der Umströmung des Schaufelblattes 16 an der Hinterkante 20 verlässt. Es strömt währenddessen entlang eines ringkanalförmigen Arbeitsgasraums 24, welcher zumindest teilweise radial innen von den inneren Plattformen 12 und radial außen von den äußeren Plattformen 14 der Turbinenschaufeln 10 begrenzt ist.

Das Schaufelblatt 16 ist in seinem Inneren hohl ausgebildet und weist darin mindestens ein erstes Kanalsystem 30 und ein zweites Kanalsystem 40 auf, welche voneinander getrennt ausgebildet sind. In jedem Kanalsystem 30, 40 ist somit ein Medium M1 bzw. M2 getrennt führbar. Das erste Medium M1 wird beispielsweise durch das Gehäuse der Turbine von radial außen dem ersten Kanalsystem 30 zugeführt. Das zweite Medium M2, welches sich vorzugsweise nicht innerhalb der Turbinenschaufel 10 mit dem ersten Medium M1 vermischen soll, wird über eine separate Zuleitung 32 der Turbinenschaufel 10 zugeführt. Die Turbinenschaufel 10 weist hierzu einen Anschluss 34 auf, an dem die Zuleitung 32, beispielsweise mittels einer aus der Dampfkühlung bekannten Dichtung 36, gasdicht angeschlossen wird. Zum Weiterführen des zweiten Mediums M2 im Schaufelblatt 16 verzweigt vom Anschluss 34 aus im Inneren ein Rohrsystem 37.

Das im Inneren des Schaufelblatts 16 zur Führung des zweiten Mediums M2 vorgesehene zweite Kanalsystem 40 kann in unterschiedlicher Weise ausgestaltet sein.

Das in FIG 2a, im Querschnitt gezeigte Schaufelblatt 16 weist einen zentralen Hohlraum 38 auf, welcher als Teil des ersten Kanalsystems 30 zum Führen des ersten Mediums vorgesehen ist. Das erste Kanalsystem 30 umfasst im gezeigten Beispiel den gesamten Hohlraum 38 der Turbinenschaufel 10. Alternative Ausgestaltungen sind denkbar, bei denen der Hohlraum 38 in mehrere Bereiche unterteilt sein kann, indem sich von der druckseitigen Wand 44 zur saugseitigen Wand 42 beispielsweise eine Rippe 45 erstreckt. Diese Rippe 45 ist in FIG 2a im Bereich der Anströmkante 18 durch gestrichelte Linien angedeutet.

Das im Inneren des ersten Kanalssystems 30 strömende erste Medium M1, vorzugsweise Kühlluft, dient zur Kühlung der Turbinenschaufel 10, welches nach erfolgter Kühlung nach Art einer offenen Kühlung aus der Hinterkante 20 der Turbinenschaufel 10 ausgeblasen und so in das annähernd parallel strömende Arbeitsgas 22 eingeblasen wird. Hierzu weist die Turbinenschaufel 10 eine erste Verbindungspassage 46 auf, welcher in die im Bereich der Hinterkante 20 vorgesehene erste Austrittsöffnung 48 mündet. In den dargestellten Figuren 2a, 2b und 2c geht der Hohlraum 38 ansatzlos in die erste Verbindungspassage 46 und dieser in die erste Austrittöffnung 48 über.

Gemäß FIG 2a umfasst das zum Weiterführen des zweiten Mediums M2 vorgesehene zweite Kanalsystem 40 einen in der saugseitigen Schaufelwand 42 vorgesehenen Hohlraum 40. Das zweite Kanalsystem 40 wurde mittels eines geeigneten Gusskerns unmittelbar beim Gießen des Schaufelblattes 16 mit hergestellt und ist über zweite Verbindungspassagen 50 mit zweiten Austrittsöffnungen 52 strömungstechnisch verbunden.

Das erste Kanalsystem 30 sowie das zweite Kanalsystem 40 erstrecken sich jeweils über die in radialer Richtung der Gasturbine erstreckende Höhe H des Schaufelblattes 16. An der Hinterkante 20 der Turbinenschaufel 10 ist eine sich über die gesamte Höhe H des Schaufelblattes 16 erstreckende erste Austrittsöffnung 48 für das erste Medium M1 und mehrere, entlang der Höhe H gleichmäßig verteilte zweite Austrittsöffnungen 52 für das zweite Medium M2 vorgesehen. Es ist auch denkbar, dass mehrere erste Austrittsöffnungen 48 und/oder lediglich eine zweite Austrittsöffnung 52 vorgesehen sind bzw. ist. Wichtig ist für diese und die nachfolgend beschriebenen Ausgestaltungen, dass sowohl erste als auch zweite Austrittsöffnungen 48, 52 zumindest teilweise auf der gleichen radialen Höhe der Hinterkante 20 liegen und sich somit überlappen, um eine möglichst nah beieinander liegende Ausblasung der beiden Medien M1, M2 zu erreichen.

FIG 2b zeigt eine alternative Ausgestaltung der Turbinenschaufel 10 im Querschnitt, bei der das zweite Kanalsystem 40 zum Führen des zweiten Mediums M2 ein im Hohlraum 38 der Turbinenschaufel 10 eingesetztes Rohr 60 umfasst. Das Rohr 60 ist über die Höhe H des Schaufelblattes 16 mit der Innenseite 74 der saugseitigen Schaufelwand 42 verbunden. Die in FIG 2b nicht dargestellten Verbindungspassagen sind in analoger Weise zu der in.FIG 2a dargestellten Turbinenschaufel 10 zum Ausblasen des Mediums M2 in der saugseitigen Schaufelwand 42 bereits beim Guss mit hergestellt oder nachträglich gebohrt worden und münden einerseits im Rohr 60 und andererseits in der Austrittsöffnung 52.

FIG 2c zeig eine weitere Variante. Ein zur Prallkühlung der Schaufelwände 42, 44 benötigter Prallkühleinsatz 62 ist zur Innenseite 74 des Schaufelprofils 16 mittels Abstandshaltern 66 beabstandet und im Querschnitt so geformt, dass dieser im Inneren des Hohlraums 38 sowohl zur Bildung des ersten Kanalsystems 30 als auch das zweiten Kanalsystems 40 beiträgt und dabei die Kanäle 30, 40 hermetisch voneinander trennt.

In gleichartiger Weise zu FIG 2b können die zweiten Verbindungspassagen 50 in der saugseitigen Schaufelwand 42 der Turbinenschaufel 10 mit gegossen worden sein.

Die Brennstoffführung erfolgt bei den bisher beschriebenen Ausgestaltungen derart, dass Teile des zweiten Kanalsystems 40, welches auch als Brennstoff-Kanalsystem bezeichnet werden kann, die Turbinenschaufel 10 in Radialrichtung durchdringen und dabei entweder als in die Schaufelwand 42, 44 eingegossener Kanal (FIG 2a), als separat ausgeführtes ein - oder mehrwandiges Röhrchen (FIG 2b) oder als separater Brennstoff-Kanal vom Prallkühleinsatz (FIG 2c) gebildet wird. Jede der vorgeschlagenen Ausgestaltungen ermöglicht eine Führung von Brennstoff nahe der Hinterkante 20, so dass eine konstruktiv einfache Eindüsung des Brennstoffs in einen Bereich gerichteter Arbeitsgasströmung möglich ist.

Die in FIG 2a bis FIG 2c dargestellten Ausgestaltungen ermöglichen es, zur Durchführung des "in-situ blade reheat" Verfahrens den Brennstoff in der Turbine zu führen und diesen dem dort strömenden Arbeitsgas 22 zuzugeben, ohne die Kühlung, die Festigkeit oder die Aerodynamik der Turbinenschaufel 10 negativ zu beeinflussen, wobei aufgrund der hermetisch getrennten Führungen der beiden Medien M1, M2 eine Vermischung innerhalb der Turbinenschaufel 10 stets zuverlässig unterdrückt wird.

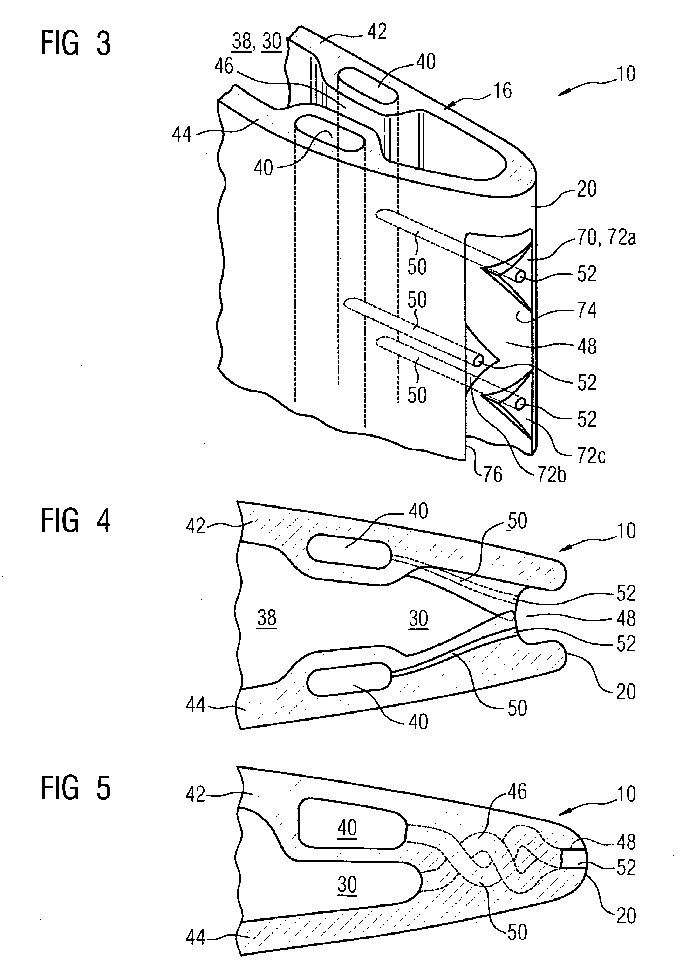

FIG 3 zeigt die perspektivische Darstellung der Hinterkante 20 des Schaufelblattes 16 unter Ausblendung der äußeren und inneren Plattform. Der im Inneren der Turbinenschaufel 10 angeordnete Hohlraum 38 geht als Teil des ersten Kanalsystems 30 in die erste Verbindungspassage 46 über, die ihrerseits in die erste Austrittöffnung 48, welche in der Hinterkante 22 der Turbinenschaufel 10 angeordnet sind, ansatzlos übergeht.

Sowohl in der saugseitigen Schaufelwand 42 als auch in der druckseitigen Schaufelwand 44 sind jeweils eingegossene zweite Kanäle 40 vorgesehen, welche sich über die Höhe des Schaufelblattes 16 erstrecken. Die zweiten Kanäle 40 sind über zweite Verbindungspassagen 50 mit den zweiten Austrittsöffnungen 52 verbunden.

Aufgrund der gezeigten Ausgestaltung ist eine Vermischung der beiden Medien M1, M2 innerhalb der Turbinenschaufel 10 wirksam vermieden.

Im Bereich der Hinterkante 20 sind Mittel vorgesehen, die eine Verdrallung bzw. Verwirbelung der beiden aus der Turbinenschaufel 10 ausströmenden Medien M1, M2 bewirken. Die in FIG 3 gezeigten Mittel sind sog. Mischereinbauten 70 zur besseren Vermischung der beiden ausströmenden Medien M1, M2. Die Mischeinbauten 70 sind pyramidenförmig, als Keile oder auch als Tetraeder 72 ausgebildet, in deren hinteren, d.h. stromabwärtigen, Dreiecksfläche jeweils die zweite Austrittsöffnung 52 vorgesehen ist. Beispielsweise sind an der Innenseite 74 der saugseitigen Schaufelwand 42 zwei Tetraeder 72a, 72c vorgesehen, deren freie Spitzen der Innenseite 76 der druckseitigen Schaufelwand 44 zugewandt sind. Zwischen den beiden Tetraedern 72a, 72c, jedoch an der Innenseite 76 der druckseitigen Schaufelwand 44 angeordnet, ist ein weiterer Tetraeder 72b vorgesehen, so dass sich für die erste Austrittsöffnung 48 ein mäanderförmiger Spalt entlang der Hinterkante 20 vom äußeren Ende zum inneren Ende ergibt.

Im Inneren der Turbinenschaufel 10 ist im Hohlraum 38 das erste Medium M1, vorzugsweise Kühlluft, in bekannter Art und Weise, beispielsweise mäanderförmig, strömbar, um währenddessen das das Schaufelblatt 16 bildende Material vor thermischer Überbelastung zu schützen. Von dort aus gelangt es über die ersten Verbindungspassagen 46 zur ersten Austrittsöffnung 48. Analog dazu wird das den zweiten Kanälen 40 zugeführte zweite Medium M2, vorzugsweise Brennstoff, zu den zweiten Austrittöffnungen 52 geführt.

Aufgrund der in ihrer Kontur scharfkantigen Mischereinbauten 70, insbesondere der kantigen Tetraeder 72, kann eine rückströmfreie Verwirbelung der durch die erste Austrittsöffnung 48 ausströmenden Kühlluft erzielt werden. Der währenddessen in die verwirbelte Kühlluft einströmende Brennstoff wird dann besonders effizient mit der Kühlluft vermischt.

Trotz der getrennten Zufuhr beider Medien M1, M2 ist es so möglich, eine effiziente Vermischung mit einer geringen Mischzeit und einer kurzen Mischstrecke zu erreichen, um das sich selbst entzündende Gemischs emissionsarm unter Bildung kleiner Vormischflammen zu verbrennen. Hierdurch kann auch die Baulänge der Turbine verringert werden. Außerdem kann aufgrund der gewählten Ausströmrichtungen der die Turbinenschaufel 10 verlassenden Medien M1, M2 gewährleistet werden, dass eine Rückströmung des Gemischs in die Austrittsöffnungen 48, 50 sicher vermieden wird. Dementsprechend kann kein Brand im Inneren, in den Kanälen 30, 40, 46, 50 der Turbinenschaufel 10 auftreten, so dass die Lebensdauer der Turbinenschaufel 10 aufrechterhalten bleibt.

FIG 4 zeigt den Querschnitt durch die Ausgestaltung einer Turbinenschaufel gemäß FIG 3, bei der die einander versetzt gegenüberliegenden Tetraeder 72, die saugseitige Schaufelwand 42, die druckseitige Schaufelwand 44, die beiden ersten Kanäle 30 sowie die beiden zweiten Kanäle 40 dargestellt sind. Anstelle der Tetraeder 72 sind auch andere geometrische Formen als Mischereinbauten 70 denkbar.

Eine alternative Ausgestaltung der Erfindung zeigt FIG 5, bei der der im Inneren der Turbinenschaufel 10 vorgesehene Hohlraum 38 zum Führen von Kühlluft als erstes Medium M1 vorgesehen ist. In der druckseitigen Schaufelwand 42 ist der zweite Kanal 40 zum Führen des zweiten Mediums M2 vorgesehen. An der Hinterkante 20 sind über die Höhe der Turbinenschaufel 10 verteilt jeweils Austrittsöffnungen 48, 52 paarweise vorgesehen. Jede erste und jede zweite Austrittsöffnung 48, 52 ist jeweils über die ihr zugeordnete wendelförmige Verbindungspassage 50, 46 mit dem zugehörigen Kanalsystem 30, 40 verbunden. Dabei sind immer zwei Verbindungskanäle 46, 50 nach Art einer Doppelhelix miteinander verschlungen. Die durch die sich schraubenförmig windenden Verbindungspassagen 46, 50 strömenden Medien M1, M2 strömen aufgrund der Schraubenform auch nach dem Verlassen der Turbinenschaufel 10 mit dem dadurch aufgeprägten Drall weiter. Die Verbindungspassagen 46, 50 sind so zueinander ausgerichtet, dass nach dem Austreten der beiden Medien M1, M2 aus den Austrittsöffnungen 48, 52 diese ineinander strömen und so eine besonders effiziente Vermischung innerhalb einer besonders kurzen Vermischungsstrecke und Vermischungszeit herbeiführen. Diese besonders effiziente Vermischung ist Voraussetzung für das emissionsarme Verbrennen des Gemischs mit kurzer Ausbranddauer nach erfolgter Selbstzündung aufgrund der im Arbeitsgas 22 herrschenden Temperatur. Durch das Verbrennen des Gemisches wird das in die Turbine strömende Arbeitsgas 22 bzw. die Kühlluft nacherhitzt, wodurch sich dessen Energiegehalt erhöht und als von der Turbine bereitgestellte mechanische Energie genutzt werden kann. Ferner erhöht sich dadurch der Wirkungsgrad der Turbine.

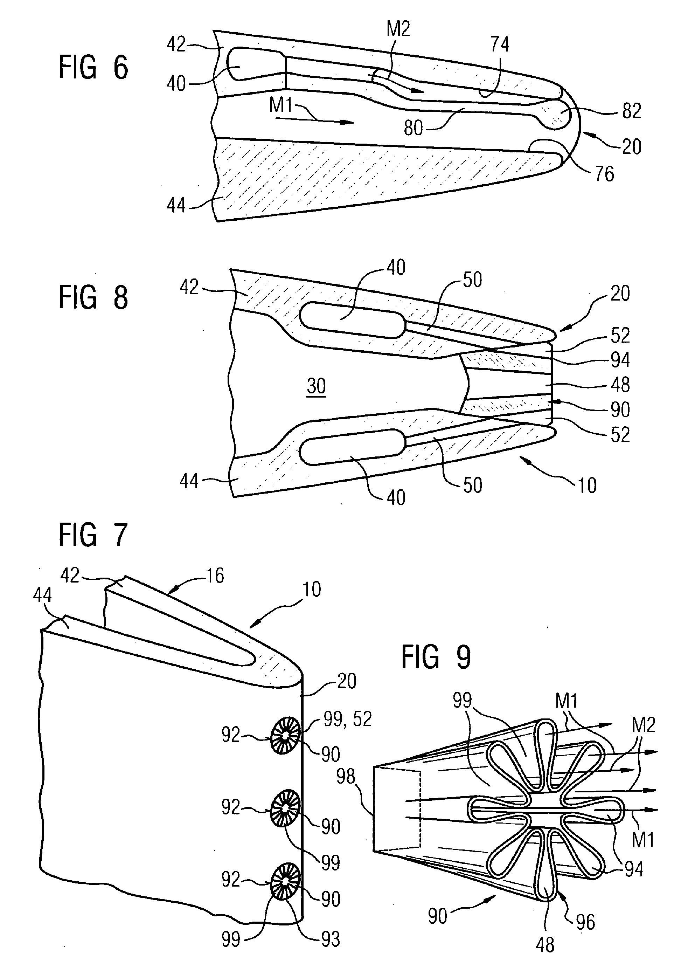

Eine weitere Variante zur Erzeugung einer besonders effizienten Vermischung der beiden, in der Turbinenschaufel 10 getrennt geführten Medien M1, M2 ist in der FIG 6 dargestellt, die einen Querschnitt durch die Hinterkante 20 einer modifizierten Turbinenschaufel 10 zeigt. Das Mittel zur Erzeugung einer besonders effizienten Vermischung ist ein einseitig fest eingespanntes bewegliches Blechelement 80 mit einem dem festen Ende gegenüberliegendem freien Ende 82. Das Blechelement 80 ist entweder an der Innenseite 76 der druckseitigen Schaufelwand 44 oder an der Innenseite 74 der saugseitigen Wand 42 beispielsweise durch Schweißen oder Löten befestigt und schwingt während des Betriebes aufgrund der daran entlang strömenden Medien M1, M2 zwischen den beiden gegenüberliegenden Innenseiten 74, 76 der druckseitigen Schaufelwand 44 und saugseitigen Schaufelwand 42 periodisch hin und her, so dass die Austrittsöffnungen 48 und 52 wechselseitig größer und kleiner werden. Dabei verwirbeln die ausströmenden Medien M1, M2, so dass stromabwärts des Blechelements 80 eine besonders effiziente Vermischung der beiden Medien M1, M2 unter Erzielung der vorgenannten Vorteile stattfindet. Gemäß FIG 6 ist das freie Ende 82 des Blechteils 80 im Querschnitt geringfügig aufgedickt, so dass es eine vergrößerte Masse an dieser Stelle aufweist. Dies erleichtert einerseits die Aufrechterhaltung der Schwingung des Blechelements 80 und dient andererseits zur erleichterten Erzeugung von Wirbeln, beispielsweise zur Erzeugung von Kármán-Wirbeln. Es ist nicht erforderlich, dass das freie Ende 82 des Blechelements 80 während des Schwingungsvorganges an den Innenseiten 74, 76 der Schaufelwände 42, 44 zum Anliegen kommt.

Weiterer Vorteil der in FIG 6 gezeigten Ausgestaltung ist, dass, wenn das das Ausströmen des Mediums M2 unterdrückt wird, das Kanalsystem 40 vom Arbeitsgasraum 24 abtrennbar ist, da der im Arbeitsgas 22 oder im Medium M1 herrschende Druck das Blechelement 80 an die Innenseite 74 der saugseitigen Schaufelwand 42 anpresst. Der sonst vom Medium M2 hervorgerufene Gegendruck fehlt in diesem Fall. Die Austrittsöffnung 52 ist dann verschlossen und somit gegen Arbeitsgaseinzug geschützt.

FIG 7 bis FIG 9 zeigen in verschiedenen Ansichten die Hinterkante 20 der Turbinenschaufel 10 mit daran düsenförmig ausgebildeten Austrittsöffnungen 48, 52. Entlang der Hinterkante 20 sind parallel zur Strömungsrichtung des Arbeitsgases 22 verlaufende Öffnungen 92 mit einer kreisrunden Kontur 93 verteilt, in welche jeweils ein sternförmiger Einsatz 90 als Mittel zur Erzeugung von Verwirbelungen in den ausströmenden Medien M1, M2 eingesetzt ist. Der Einsatz 90 weist, wie in FIG 9 dargestellt, ausströmseitig - bezogen auf die Strömungsrichtung der beiden Medien M1, M2 - eine umlaufende Kontur 96 nach Art eines Sternes auf. Einströmseitig ist eine wesentliche einfachere Kontur 98, beispielsweise die eines Rechtecks vorgesehen.

Eingesetzt in der Öffnung 92 bildet die vom der sternförmig umlaufenden Kontur 96 des Einsatzes 90 eingeschlossene Fläche die erste Austrittsöffnung 48. Die zwischen der Kreiskontur 93 der Öffnung 92 und der außerhalb der sternförmigen Kontur 96 liegende Fläche bildet dann die zweite Austrittsöffnung 52.

Sofern die Turbinenschaufel 10 im Bereich der Hinterkante 20 gemäß FIG 8 mit zwei jeweils in den Schaufelwänden 42, 44 vorgesehenen zweiten Kanälen 40 sowie mit der in der Hinterkante eingebrachten Öffnung 92 (vgl. FIG 7) versehen ist, kann mit einem gemäß FIG 9 ausgestalteten und in die Öffnung 92 eingesetzten Einsatz 90 eine besonders einfache Verwirbelung der beiden an der Hinterkante 20 der Turbinenschaufel 10 ausströmenden Medien M1, M2 erreicht werden. Im Inneren des Einsatzes 90 strömt dann durch die rechteckige Querschnittsfläche das erste Medium M1, vorzugsweise Kühlluft, ein und wird aufgrund der sich entlang der Strömungsrichtung verändernden Kontur des Einsatzes 90 entsprechend dieser geführt. Die ausströmseitige Kontur 96 des Einsatzes 90 mit sternförmig hervorstehenden Fingern 94 bedingt, dass in den zwischen den Fingern 94 liegenden Zwischenräumen 99 das Medium M2 strömen kann, welches aus den zweiten Verbindungspassagen 50 zugeführt wird. Mit einer Hinterkante 20 mit mehreren düsenartigen Austrittsöffnungen 48, 52 können auch die mit der Erfindung einhergehenden Vorteile erreicht werden. Diese auch als Blütenmischer bezeichnete Ausgestaltung weist zudem äußerst intensive Vermischungsraten auf.

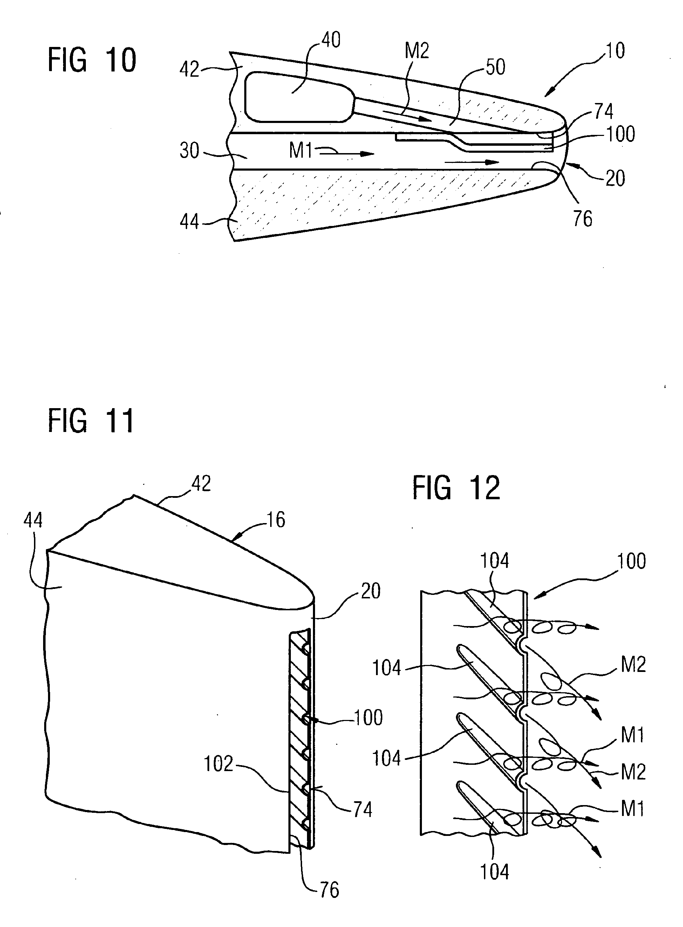

FIG 10 bis FIG 12 zeigen eine weitere Ausgestaltung der Erfindung, bei der im Bereich der Hinterkante 20 über deren Höhe H ein wellenartiger Einsatz 100 zur Erzeugung von Verwirbelungen in den ausströmenden Medien M1, M2 vorgesehen ist. Die Hinterkante 20 weist dazu einen sich über ihre Höhe H erstreckenden rechteckigen Schlitz 102 auf, der durch einen darin eingesetzten Einsatz 100 über seine Höhe zweigeteilt ist. Der Einsatz 100 ist zur beiden Innenseiten 74, 76 der Schaufelwände 42, 44 beabstandet, wobei der Abstand zwischen jeder Innenwand 74, 76 und Einsatz 10 aufgrund der Wellenform des Einsatzes 100, entlang der Hinterkante 20 betrachtet, periodisch zu- und abnimmt. Die als Mittel zur Erzeugung von Verwirbelungen vorgesehene Wellenfront 104 des Einsatzes 100 ist gegenüber der Strömungsrichtung der Medien M1, M2 geneigt, so dass die beiderseits des Einsatzes 100 geführten Medien M1, M2 quer über die Wellen des Einsatzes 100 strömen und von diesen verwirbelt werden, so dass eine homogene Vermischung der beiden Medien M1, M2 stromab des Einsatzes 100 erfolgt. Das entstehende Gemisch heizt Arbeitsgas 22 nach oder kann auch zur Emissionsbehandlung des Arbeitsgases 22 dienen.

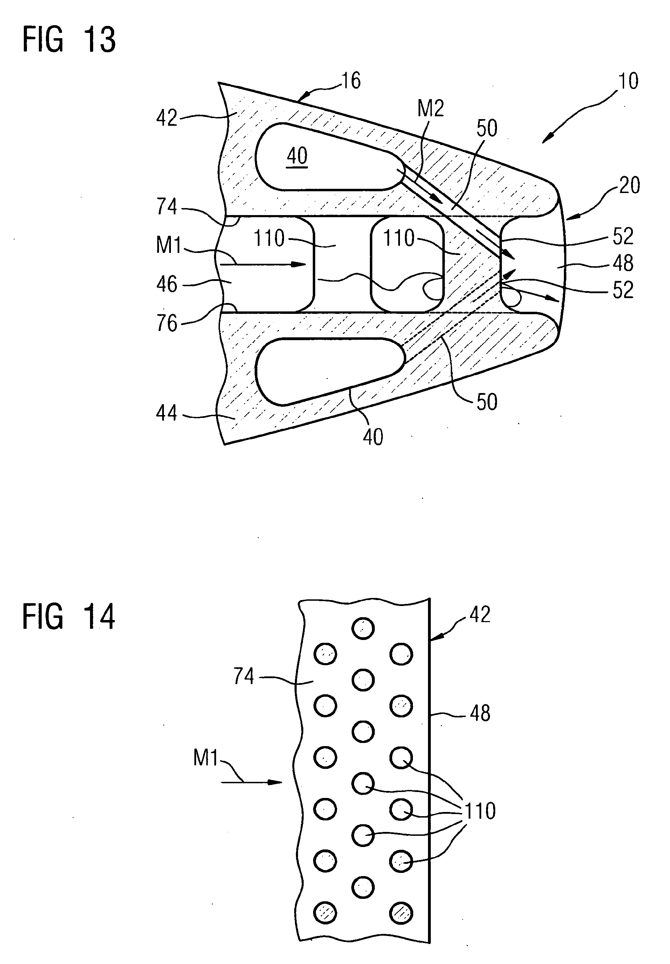

FIG 13 und FIG 14 zeigen eine alternative Ausgestaltung, bei der lediglich das durch die erste Verbindungspassagen 46 geführte erste Medium M1 aufgrund von versetzt angeordneten Pins 110, welche sich von der Innenseite 76 der druckseitigen Schaufelwand 44 zur Innenseite 74 der saugseitigen Schaufelwand 42 erstrecken, unter Bildung einer Serie von Wirbelstraßen verwirbelt wird. Zur besonders effizienten Vermischung erfolgt die Ausblasung des zweiten Mediums M2 aus der Turbinenschaufel 10 in das verwirbelt strömenden erste Medium M1 durch an der Hinterkante 20 vorgesehene zweite Austrittöffnungen 52, deren vorgeschaltete zweite Verbindungspassagen 50 geradlinig verlaufen, aber zur äußeren oder inneren Plattform hin geneigt sind. Demnach ist das Mittel zur Erzeugung von Verwirbelungen im Medium M1 das in der ersten Verbindungspassage 46 vorgesehene Feld von Pins 110. Anstelle der Pins 110 können auf den Innenseiten 74, 76 auch Dimpels, Turbulatoren oder Rillen vorgesehen sein.

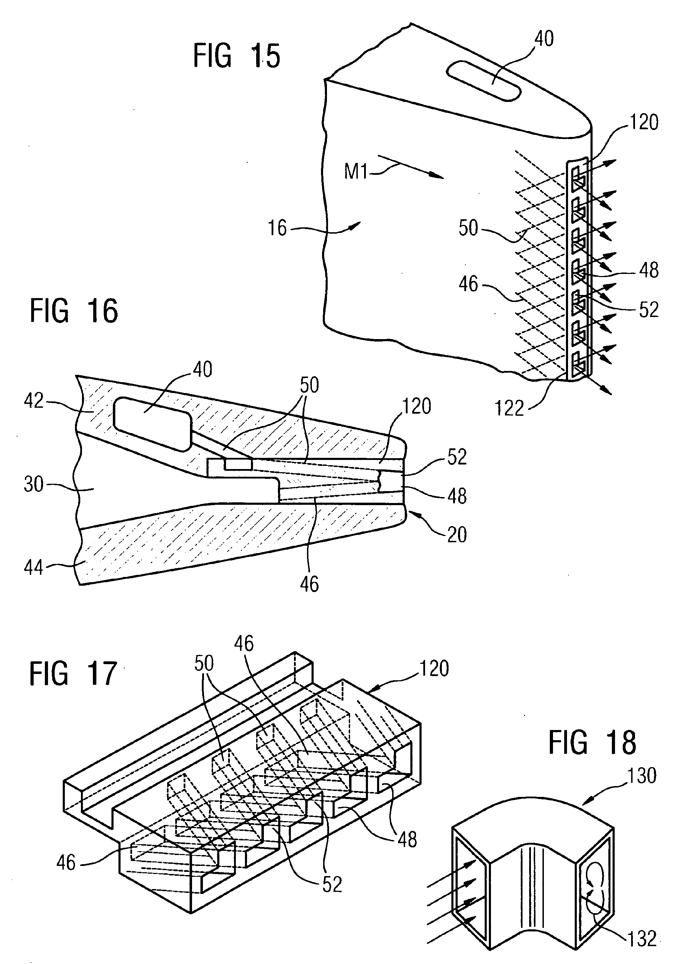

Eine weitere Ausgestaltung der Erfindung ist in den FIG 15 bis FIG 17 gezeigt, bei denen ein im Wesentlichen massiver und in seinen Ausmaßen rechteckiger Einsatz 120 in einen in der Hinterkante 20 der Turbinenschaufel 10 vorgesehenen Schlitz 122 eingesetzt ist, mit dem die Verwirbelung der beiden an dieser Stelle ausströmenden Medien M1, M2 herbeiführt wird. Der in FIG 17 in perspektivischer Darstellung gezeigte Einsatz 120 ist mit mehreren parallel zueinander verlaufenden ersten Verbindungspassagen 46 ausgestattet, welche quer zu den zweiten Verbindungspassagen 50 verlaufen. Erste und zweite Verbindungspassagen 46, 50 kreuzen einander, ohne an den Kreuzungsstellen miteinander verbunden zu sein und münden in paarweise zusammenfallende Austrittsöffnungen 48, 52, wo die Vermischung der beiden Medien M1, M2 stattfindet. Durch die schräg zueinander liegenden Ausströmrichtungen der beiden Medien M1, M2 werden diese innerhalb einer kurzen Mischstrecke effizient miteinander verwirbelt und vermischt.

Parallel zu den nach außen und nach innen zu den Plattformen geneigten Verbindungspassagen 46, 50 kann auf der dem Arbeitsgas 22 zugewandten Oberfläche der Schaufelwände 42, 44, vorzugsweise im Bereich der Hinterkante 20 ebenso Verwirbelungselemente in Form von Rillen oder Dimpels vorgesehen sein, die das Arbeitsgas 22 zusätzlich verwirbeln.

FIG 18 zeigt in perspektivischer Darstellung einen rohrförmigen, im Strömungsquerschnitt rechteckigen Einsatz 130, welcher im Inneren Mittel zur Erzeugung von Nierenwirbel 132 aufweist. Das in den Nierenwirbelstrom eingebrachte andere Medium wird aufgrund der Verwirbelung besonders gleichmäßig mit dem einen Medium vermischt.

Anstelle des nachträglichen Einsetzen der Einsätze 90, 100, 120, 130 in ein gegossenes Schaufelblatt 16 und deren Verlötung oder Verschweißung können diese auch als im Schaufelblatt 16 zurückbleibender Bestandteil eines Gusskerns mit in der Turbinenschaufel 10 eingegossen werden.

Eine mit einer solchen Turbinenschaufel ausgestattete Turbine ist in besonderem Maße geeignet, das in ihr strömende Arbeitsmedium durch Zuführen weiterer Medien zu manipulieren. Beispielsweise kann der Energiegehalt des Arbeitsmediums durch "in-situ blade reheat" erhöht oder die Emissionsbelastung des Arbeitsmediums durch die Zugabe von Additiven gesenkt werden.

Insgesamt wird mit der Erfindung eine Hinterkante einer Turbinenschaufel vorgeschlagen, durch die zwei im Inneren der Turbinenschaufel getrennt geführte Medien derartig dem Arbeitsgas zugegeben werden, dass diese sich zuerst miteinander vermischen, bevor das Gemisch oder eines der Medien lediglich teilweise mit dem Arbeitsgas reagiert. Um eine besonders effiziente Vermischung beider Medien innerhalb einer kurzen Mischstrecke zu erreichen, sind Mittel zum Verwirbeln oder Verdrallen der Strömungen vorgesehen, wodurch, im Falle eines brennbaren Gemisches, eine besonders emissionsarme Verbrennung der Gemisches zum Nachheizen des Arbeitsgases aufgrund einer besonders kurzen Mischstrecke und einer kurzen Mischzeit rechtzeitig, noch vor Verlassen der Turbine, erzielt werden kann.

## Patentansprüche

1. Turbinenschaufel (10),
mit einem profilierten, von einem Arbeitsgas (22) umströmbaren Schaufelblatt (16),
welches eine vom Arbeitsgas (22) anströmbare Vorderkante (18) aufweist sowie
eine sich entlang einer Schaufelblatthauptachse (21) von einem Fußbereich (13) des Schaufelblattes (16) zu einem diesem gegenüberliegenden Kopfbereich (15) erstreckenden Hinterkante (20), an der das Arbeitsgas (22) abströmbar ist, und
mit einem ersten Kanalsystem (30) und mit einem zweiten Kanalsystem (40) zum getrennten Führen zweier unterschiedlicher, der Turbinenschaufel (10) getrennt zuführbaren Medien (M1, M2), von denen eines ein Brennstoff ist,
wobei das erste Kanalsystem (30) in mindestens einer ersten, im Bereich der Hinterkante (20) angeordnete Austrittsöffnung (48) zum Ausblasen des ersten Mediums (M1) in das Arbeitsgas (22) mündet, und
wobei mindestens eine im Bereich der Hinterkante (20) angeordnete, zweite Austrittsöffnung (52) zum Ausblasen des zweiten Mediums (M2) mit dem zweiten Kanalsystem (40) verbunden ist,
**dadurch gekennzeichnet, dass**
entlang der Schaufelblatthauptachse (21) betrachtet die zweite Austrittsöffnung (52) zumindest teilweise auf der gleichen Höhe angeordnet ist wie die erste Austrittsöffnung (48).

2. Turbinenschaufel (10) nach Anspruch 1,
bei der jeweils eine der ersten Austrittsöffnungen (48) mit jeweils einer der zweiten Austrittsöffnungen (52) ein entlang der Schaufelblatthauptachse (21) gesehen sich überlappendes Paar von Öffnungen bildet.

3. Turbinenschaufel (10) nach Anspruch 1 oder 2,
mit einer Vielzahl von ersten Austrittsöffnungen (48) und/oder einer Vielzahl von zweiten Austrittsöffnungen (52).

4. Turbinenschaufeln (10) nach einem der Ansprüche 2 oder 3,
bei der entlang der Hinterkante (20) Paare von Öffnungen aufeinander folgen.

5. Turbinenschaufel (10) nach einem der Ansprüche 1 bis 4,
bei der im Bereich der Hinterkante (20) ein Mittel vorgesehen ist, welches eine Vermischung des ersten Mediums (M1) mit dem zweiten Medium (M2) unmittelbar stromab der Austrittsöffnungen (48, 52) herbeiführt.

6. Turbinenschaufel (10) nach Anspruch 5,
bei der das Mittel eine rückströmfreie Vermischung des ersten Mediums (M1) mit dem zweiten Medium (M2) hervorruft, indem eines der beiden Medium (M1, M2) oder beide Medien (M1, M2) im Bereich einer scharfen Kante in das Arbeitsgas (22) ausblasbar ist.

7. Turbinenschaufel (10) nach Anspruch 5 oder 6, bei der das Mittel in der Hinterkante (20) des Schaufelblatts (16) angeordnete Verbindungspassagen (46, 50) umfasst,
welche mindestens einen der beiden Kanälen (30, 40) mit den ihm (ihr) zugeordneten Austrittsöffnungen (48, 52) verbinden,
wobei die Verbindungspassagen (46, 50) dergestalt sind, dass diese dem durch sie strömenden Medium (M1, M2) einen Drall oder Wirbel aufprägen.

8. Turbinenschaufel (10) nach Anspruch 6,
bei der das Mittel in den Austrittsöffnungen (48, 52) vorgesehen ist.

9. Turbinenschaufel (10) nach Anspruch 5 oder 6,
bei der das Mittel zum Vermischen des ersten Mediums (M1) mit dem zweiten Medium (M2) an einer Innenseite der saugseitigen und/oder an einer Innenseite der druckseitigen Schaufelwand (42, 44) des Schaufelblatts (16) vorgesehen ist.

10. Turbinenschaufel (10) nach Anspruch 9,
bei der als Mittel tetraeder-förmige Mischereinbauten, Dimpels, Turbulatoren oder Pin-Felder in einer der Austrittsöffnungen (48, 52) oder stromauf davon vorgesehen sind.

11. Turbinenschaufel (10) nach einem der Ansprüche 1 bis 10,
bei der an dem vom Arbeitsgas (22) umströmbaren Schaufelblatt (16) heißgasseitig Turbulenzelemente vorgesehen sind.

12. Mehrteilige Turbinenschaufel (10) nach einem der Ansprüche 5 bis 11,
bei der das Schaufelblatt (16) gegossen ist und das Mittel zum Vermischen der beiden Medien (M1, M2) als separat hergestellter Einsatz (90, 100, 110, 120) im Schaufelblatt (16) befestigt ist.

13. Turbinenschaufel (10) nach Anspruch 12,
bei der der Einsatz (90, 100, 110, 120) wellblechartig oder düsenförmig ausgebildet und zur Bildung der Austrittsöffnungen (48, 52) in eine Bohrung (90) oder in einen Schlitz (102, 122) eingesetzt ist.

14. Gasturbine mit einer Turbinenschaufel (16) nach einem der vorangehenden Ansprüche.

## Claims

1. Turbine blade (10),
with a profiled blade airfoil (16) which is exposable to circumflow by an operating gas (22),
which has a leading edge (18) which is exposable to inflow of the operating gas (22) and also
a trailing edge (20) which extends along a blade airfoil principal axis (21) from a root region (13) of the blade airfoil (16) to a tip region (15) which lies opposite said root region (13), on which the operating gas (22) can flow out, and
with a first passage system (30) and with a second passage system (40) for the separate guiding of two different media (M1, M2) one of which is a fuel and which can be fed separately to the turbine blade (10),
wherein the first passage system (30) leads to at least one first discharge opening (48), which is arranged in the region of the trailing edge (20), for blowing out the first medium (M1) into the operating gas (22), and
wherein at least one second discharge opening (52), which is arranged in the region of the trailing edge (20), for blowing out the second medium (M2) is connected to the second passage system (40),
**characterized in that**
the second discharge opening (52) is arranged at least partially at the same height as the first discharge opening (48), as seen along the blade airfoil principal axis (21).

2. Turbine blade (10) according to Claim 1,
in which one of the first discharge openings (48) in each case with one of the second discharge openings (52) in each case forms an overlapping pair of openings, as seen along the blade airfoil principal axis.

3. Turbine blade (10) according to either of Claims 1 and 2, with a multiplicity of first discharge openings (48) and/or a multiplicity of second discharge openings (52).

4. Turbine blade (10) according to one of Claims 2 and 3,
in which pairs of openings follow each other along the trailing edge (20).

5. Turbine blade (10) according to one of Claims 1 to 4,
in which in the region of the trailing edge (20) means are provided which bring about a mixing of the first medium (M1) with the second medium (M2) directly downstream of the discharge openings (48, 52).

6. Turbine blade (10) according to Claim 5,
in which the means create a backflow-free mixing of the first medium (M1) with the second medium (M2) by one of the two media (M1, M2), or both of the two media (M1, M2), being able to be blown out into the operating gas (22) in the region of a sharp edge.

7. Turbine blade (10) according to either of Claims 5 and 6,
in which the means comprise connecting passages (46, 50) which are arranged in the trailing edge (20) of the blade airfoil (16),
which connect at least one of the two passages (30, 40) to the discharge openings (48, 52) which are associated with it, or with them,
wherein the connecting passages (46, 50) are of such shape that these impart an eddy or vortex to the medium (M1, M2) which flows through them.

8. Turbine blade (10) according to Claim 6,
in which the means are provided in the discharge openings (48, 52).

9. Turbine blade (10) according to either of Claims 5 and 6,
in which the means for mixing the first medium (M1) with the second medium (M2) are provided on an inner side of the suction-side blade wall (42) and/or on an inner side of the pressure-side blade wall (44) of the blade airfoil (16).

10. Turbine blade (10) according to Claim 9,
in which tetrahedron-shaped mixing inserts, dimples, turbulators or fields of pins are provided as the means in one of the discharge openings (48, 52) or upstream thereof.

11. Turbine blade (10) according to one of Claims 1 to 10,
in which turbulence elements are provided on the hot-gas side on the blade airfoil (16) which is exposable to circumflow by the operating gas (22).

12. Multi-section turbine blade (10) according to one of Claims 5 to 11,
in which the blade airfoil (16) is cast, and the means for mixing the two media (M1, M2) are fastened in the blade airfoil (16) as a separately produced insert (90, 100, 110, 120).

13. Turbine blade (10) according to claim 12,
in which the insert (90, 100, 110, 120) is formed like a corrugated plate or in the shape of a nozzle and is inserted in a hole (90) or in a slot (102, 122) for forming the discharge openings (48, 52).

14. Gas turbine with a turbine blade (10) according to one of the preceding claims.

## Revendications

1. Aube ( 10 ) de turbine,
comprenant une lame ( 16 ) d'aube profilée et sur laquelle peut passer un gaz ( 22 ) de travail,
qui a un bord ( 18 ) avant auquel peut arriver du gaz ( 22 ) de travail ainsi qu'
un bord ( 20 ) arrière s'étendant le long d'un axe ( 21 ) principal de lame d'aube d'une partie ( 13 ) de pied de la lame ( 16 ) d'aube à une partie ( 15 ) de tête qui lui est opposée, où le gaz ( 22 ) de travail peut partir, et
comprenant un premier système ( 30 ) de canalisation et un deuxième système ( 40 ) de canalisation pour la conduite séparée de deux fluides ( M1, M2 ) différents pouvant être amenés de manière séparée à l'aube ( 10 ) de turbine, dont l'un est un combustible,
dans laquelle le premier système ( 30 ) de canalisation débouche dans au moins une première ouverture ( 48 ) de sortie disposée dans la zone du bord ( 20 ) arrière pour l'insufflation du premier fluide ( M1 ) dans le gaz ( 22 ) de travail, et
dans laquelle au moins une deuxième ouverture ( 52 ) de sortie, disposée dans la zone du bord ( 20 ) arrière pour l'insufflation du deuxième fluide ( M2 ), communique avec le deuxième système ( 40 ) de canalisation,
**caractérisée en ce que**
considéré le long de l'axe ( 21 ) principal de la lame d'aube, la deuxième ouverture ( 52 ) de sortie est disposée au moins en partie au même niveau que la première ouverture ( 48 ) de sortie.

2. Aube ( 10 ) de turbine suivant la revendication 1,
dans laquelle respectivement l'une des premières ouvertures ( 48 ) de sortie forme, avec respectivement l'une des deuxièmes ouvertures ( 52 ) de sortie, une paire d'ouvertures se chevauchant considéré le long de l'axe ( 21 ) principal de la lame d'aube.

3. Aube ( 10 ) de turbine suivant la revendication 1 ou 2, ayant une pluralité de premières ouvertures ( 48 ) de sortie et/ou une pluralité de deuxièmes ouvertures ( 52 ) de sortie.

4. Aube ( 10 ) de turbine suivant l'une des revendications 2 ou 3,
dans laquelle des paires d'ouvertures se succèdent le long du bord ( 20 ) arrière.

5. Aube ( 10 ) de turbine suivant l'une des revendications 1 à 4,
dans laquelle il est prévu dans la zone du bord ( 20 ) arrière un moyen qui provoque un mélange du premier fluide ( M1 ) au deuxième fluide ( M2 ) juste en aval des ouvertures ( 48, 52 ) de sortie.

6. Aube ( 10 ) de turbine suivant la revendication 5,
dans laquelle le moyen provoque un mélange sans reflux du premier fluide ( M1 ) au deuxième fluide ( M2 ) par le fait que l'un des deux fluides ( M1, M2 ) ou que les deux fluides ( M1, M2 ) peut être insufflé dans le gaz ( 22 ) de travail dans la zone d'un bord vif.

7. Aube ( 10 ) de turbine suivant la revendication 5 ou 6, dans laquelle le moyen comprend des passages ( 46, 50 ) de communication disposés dans le bord ( 20 ) arrière de la lame ( 16 ) d'aube,
qui mettent au moins l'une des deux canalisations ( 30, 40 ) en communication avec les ouvertures ( 48, 52 ) de sortie qui lui ou leur sont associées,
dans laquelle les passages ( 46, 50 ) de communication sont conformés, de manière à imprimer une torsion ou un tourbillonnement aux fluides ( M1, M2 ) qui y passent.

8. Aube ( 10 ) de turbine suivant la revendication 6,
dans laquelle le moyen est prévu dans les ouvertures ( 48, 52 ) de sortie.

9. Aube ( 10 ) de turbine suivant la revendication 5 ou 6,
dans laquelle le moyen est prévu pour mélanger le premier fluide ( M1 ) au deuxième fluide ( M2 ) sur une face intérieure de la paroi ( 42 ) d'extrados et/ou sur une face intérieure de la paroi ( 44 ) d'intrados de la lame ( 16 ) d'aube.

10. Aube ( 10 ) de turbine suivant la revendication 9,
dans laquelle il est prévu comme moyen des inserts formant mélangeur en forme de tétraèdre, des bossages des agents de turbulence ou des champs de broches dans l'une des ouvertures ( 48, 52 ) de sortie ou en amont de celle ci.

11. Aube ( 10 ) de turbine suivant l'une des revendications 1 à 10,
dans laquelle il est prévu des éléments de turbulence du côté du gaz chaud sur la lame ( 16 ) d'aube, sur laquelle passe le gaz ( 22 ) de travail.

12. Aube ( 10 ) de turbine en plusieurs parties suivant l'une des revendications 5 à 11,
dans laquelle la lame ( 16 ) d'aube est coulée et le moyen de mélange des deux fluides ( M1, M2 ) est fixé à la lame ( 16 ) d'aube sous la forme d'inserts ( 90, 100, 110, 120 ) fabriqués séparément.

13. Aube ( 10 ) de turbine suivant la revendication 12,
dans laquelle l'insert ( 90, 100, 110, 120 ) est de type en tôle ondulée ou en forme de buse et est utilisé pour la formation des ouvertures ( 48, 52 ) de sortie dans un trou ( 90 ) ou dans une fente ( 102, 122 ).

14. Turbine à gaz ayant une aube ( 16 ) de turbine suivant l'une des revendications précédentes.
